# EUROPÄISCHE PATENTSCHRIFT

(11) **EP 1 223 648 B1**
(45) Veröffentlichungstag und Bekanntmachung des Hinweises auf die Patenterteilung: **09.07.2008**
(21) Anmeldenummer: 01250439.5
(22) Anmeldetag: 13.12.2001
(51) Int. Cl.: H02B 1/38

(54) **Tür mit einem Dichtungsmittel zum Verschliessen eines Schaltfeldes oder Schaltschrankes**
Door with sealing means for closing a switch board or cabinet
Porte comportant des moyens d'étanchéité pour la fermeture d'un tableau ou d'une armoire de commutation

(30) Priorität: 16.01.2001 DE 10102664
(43) Veröffentlichungstag der Anmeldung: 17.07.2002
(73) Patentinhaber: SIEMENS AKTIENGESELLSCHAFT, 80333 München (DE)
(72) Erfinder: Bayer, Joachim, 74214 Bieringen (DE); Daniel, Joachim, 04317 Leipzig (DE); Lienau, Bernd, 63801 Kleinostheim (DE)

(56) Entgegenhaltungen:
- DE-C- 4 004 838

## Beschreibung

Die Erfindung betrifft eine Tür zum Verschließen eines Schaltfeldes oder Schaltschrankes mit Beschlagteilen wie Scharnierteilen und Verschlussorganen sowie mit einem an der Innenseite eines Türblattes der Tür angebrachten Rahmen als Träger eines Dichtungsmittels, wobei das Türblatt Durchtrittsöffnungen für die Beschlagteile bzw. deren Befestigungsmittel besitzt. (Siehe DE-U1-297 23 392).

Eine Tür der genannten Art ist beispielsweise durch DE 297 23 392 U1 oder DE 88 13 904 U1 bekannt geworden. Nach dem zuletzt genannten Patentdokument wird der an der Innenseite der Tür vorgesehene Rahmen mittels auf die Innenseite der Tür geschweißter Gewindebolzen befestigt. Soll es daher möglich sein, Türen für Schaltschränke oder Schaltfelder wahlweise mit und ohne Dichtung bereitzustellen, so muss die Grundausführung der Tür stets die Gewindebolzen aufweisen, um den Arbeitsaufwand für die Herstellung einer Tür mit Dichtung möglichst gering ist.

Um die standardmäßige Ausrüstung der Türen mit Gewindebolzen zu vermeiden, wurde in dem bereits erwähnten DE 297 23 392 U1 eine Klebverbindung zwischen dem Rahmen und der Tür vorgeschlagen. Obwohl eine solche Klebverbindung allen Ansprüchen an Festigkeit und Beständigkeit genügen kann, bedarf es besonderer Sorgfalt und Sauberkeit bei der Verarbeitung der zu verbindenden Teile. Auch kommt es auf eine sorgfältige Positionierung der Teile an, da sich insbesondere hochfeste Haftklebschichten nach der ersten Berührung nicht mehr trennen lassen.

Der Erfindung liegt hiervon ausgehend die Aufgabe zugrunde, die wahlweise Bereitstellung von Türen mit und ohne Dichtung auf der Basis einer möglichst einfachen und preiswerten Standard-Ausführung einer Tür zu ermöglichen.

Diese Aufgabe wird gemäß der Erfindung dadurch gelöst, dass der Rahmen an der Tür anliegende Befestigungsschenkel aufweist, dass vertikale Befestigungsschenkel mit den Durchtrittsöffnungen des Türblattes korrespondierende Aufnahmeöffnungen besitzen und dass mittels der Befestigungsmittel für die Beschlagteile zugleich der Rahmen am Türblatt befestigt ist.

Bei der Anordnung nach der Erfindung sind die Türen für die Ausführung mit und ohne Dichtung vollkommen gleich. Soll die Tür eine Dichtung erhalten, so werden bei der Montage der Beschlagteile (Scharniere und Verschlussorgane) der Rahmen oder wenigstens dessen vertikale Rahmenstücke mit den genannten Durchtrittsöffnungen auf die Befestigungsmittel der Beschlagteile belegt, so dass nun durch die Befestigungsmittel zugleich die Beschlagteile und der Rahmen an der Tür befestigt werden. Demgegenüber war bisher (vgl. die oben genannten DE 297 23 392 U1 und DE 88 13 904 U1) die Befestigung der Beschlagteile stets unabhängig von der Befestigung eines Rahmens der genannten Art. Durch den Wegfall gesonderter Befestigungsmittel können nun Türen mit einer Dichtung preiswerter als bisher hergestellt werden.

Als weiterer Vorteil entfällt das besonders bei der Benutzung aufgeschweißter Bolzen zu beobachtende Problem von Markierungen auf der Türaußenseite und eventueller zusätzlicher Einsenkungen beim Anziehen der Befestigungsmittel für den Rahmen.

In bekannter Weise kann der als Träger der Dichtung vorgesehene Rahmen einstückig oder mehrteilig ausgeführt sein. Dabei erweist es sich als zweckmäßig, wenn der Rahmen aus vertikalen, mit den Aufnahmeöffnungen versehenen Rahmenstücken und querliegenden Rahmenstücken gebildet ist, die nur mit den vertikalen Rahmenstücken verbunden sind.

Entsprechend der großen Vielfalt bekannter Dichtungsprofile kann der bei der Erfindung vorgesehene Rahmen eine zur Aufnahme dieser Dichtungsprofile geeignete Gestalt aufweisen. Als zweckmäßig und wirksam haben sich jedoch insbesondere Dichtungen mit einem Rechteckprofil aus einem kompressiblen Material erwiesen. Solche Profile können an der Tür in der Weise befestigt werden, dass die vertikalen und die quer liegenden Rahmenstücke parallel und im gleichen Abstand zur randseitigen Abkantungen der Tür verlaufend angeordnete Randschenkel zur Bildung einer Nut für das genannte Dichtungsmittel aufweisen. Zusammen mit den zur Anlage an der Innenseite der Tür vorgesehenen Befestigungsschenkeln hat daher der Rahmen bzw. haben seine Rahmenstücke eine einfache winklige bzw. L-förmige Querschnittsform.

Für die Verbindung der vertikalen und der quer liegenden Rahmenstücke gibt es eine Reihe zweckmäßiger Möglichkeiten. Als geeignet für die Zwecke der Erfindung hat es sich erwiesen, eine form- und/oder kraftschlüssige Verbindung zu wählen. Hierzu können nach einer Ausgestaltung der Erfindung die vertikalen Rahmenstücke an ihren Enden mit Klemmzungen zum Übergreifen von Befestigungsschenkeln der querliegenden Rahmenstücke versehen sein, die Ausprägungen zum Eingreifen in Fensteröffnungen der Klemmzungen besitzen.. Dies hat den Vorteil, dass es keiner Handhabung gesonderter Verbindungselemente durch einen Benutzer bedarf, wie dies beispielsweise bei der Verwendung von separaten Eckstücken oder Schraubverbindungen der Fall ist.

Häufig wird es sich als erforderlich oder zweckmäßig erweisen, die Beschlagteile in der Höhe nicht symmetrisch zur Mitte der Tür anzuordnen. Dies würde es erfordern, die vertikalen Rahmenstücke an die linke und die rechte Seite der Tür anzupassen. Dies lässt sich vermeiden, wenn nach einer weiteren Ausgestaltung der Erfindung die vertikalen Rahmenstücke zur wahlweisen Verwendung als linkes oder rechtes Rahmenstück mit spiegelbildlich angeordneten Paaren von Öffnungen versehen werden.

Die Erfindung wird im Folgenden anhand des in den Figuren dargestellten Ausführungsbeispieles näher erläutert.

Die Figur 1 zeigt eine Tür für einen Schaltschrank oder ein Schaltfeld von der Innenseite mit einem Rahmen als Träger eines Dichtungsmittels.

Die Figur 2 ist eine vergrößerte Einzelheit im Bereich der rechten oberen Ecke der in der Figur 1 gezeigten Tür.

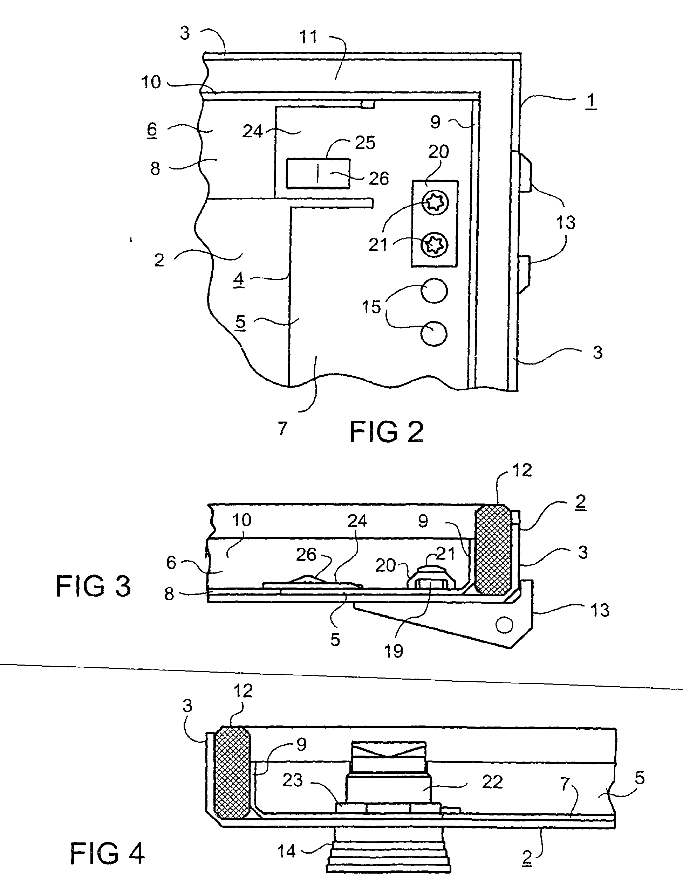

Einen Schnitt im Randbereich der Tür mit Rahmen und Dichtungsmittel sowie mit einem Scharnier zeigt die Figur 3.

Einen der Figur 3 gegenüberliegenden Bereich der Tür mit einem Verschlussorgan zeigt die Figur 4.

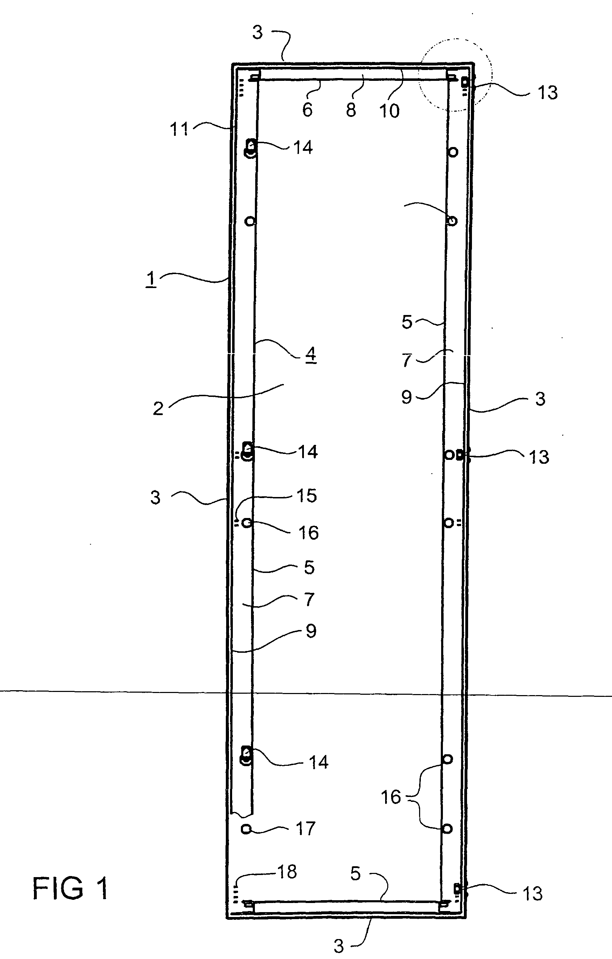

Die in der Figur 1 gezeigte Tür 1 weist ein Türblatt 2 aus Stahlblech auf, das an seinem gesamten Umfang mit einer randseitigen Abkantung 3 versehen ist. Am Türblatt 2 ist innen ein Rahmen 4 angebracht, der aus vertikalen Rahmenstücken 5 und querliegenden (horizontalen) Rahmenstücken 6 zusammengesetzt ist. Beide Arten von Rahmenstücken besitzen Befestigungsschenkel 7 bzw. 8 zur Auflage auf dem Türblatt 2 und parallel zu der randseitigen Abkantung 3 des Türblattes 2 stehende Randschenkel 9 bzw. 10. Hierdurch wird eine am äußeren Umfang der Tür 1 gelegene, parallelwandige Nut 11 zur Aufnahme eines Dichtungsmittels 12 gebildet, wie dies näher den Figuren 2, 3 und 4 zu entnehmen ist.

Zur Befestigung des Rahmens 4 am Türblatt 2 dienen Beschlagteile in der Gestalt von Scharnierteilen 13 und Verschlussorganen 14, die entlang den vertikalen Seiten der Tür 1 angeordnet sind. Die Anzahl und Verteilung dieser Beschlagteile richtet sich in bekannter Weise nach der Größe und dem Gewicht der Tür sowie den Eigenschaften der Beschlagteile, wie Tragfähigkeit der Scharniere und Haltekraft der Verschlussorgane. In dem gezeigten Ausführungsbeispiel sind je vertikaler Seite der Tür 1 drei Scharnierteile 13 und gleichfalls drei Verschlussorgane 14 vorgesehen, z.B. in der Gestalt von Vorreiberverschlüssen, die mit einem Schlüssel zu bedienen sind. Im vorliegenden Zusammenhang kommt es aber auf das System oder die Wirkungsweise dieser Beschlagteile nicht an. Wesentlich ist lediglich, dass die Beschlagteile durch Befestigungselemente mit dem Türblatt 2 verbunden sind, die Durchtrittsöffnungen des Türblattes 2 durchsetzen und an der Innenseite des Türblattes 2 um ein ausreichendes Maß überstehen. Unter Befestigungselementen werden dabei sowohl diskrete Bauteile wie Schrauben und Muttern verstanden als auch mit diesen Bauteilen zusammenwirkende Elemente der Beschlagteile selbst, wie beispielsweise ein Zapfen eines Scharnierarmes, der durch eine Durchtrittsöffnung des Türblattes 2 ragt und der eine Gewindeöffnung für eine Befestigungsschraube enthält. Einzelheiten solcher Anordnungen werden noch erläutert.

Gemäß der Figur 1 sind jeweils beide Rahmenstücke 5 und 6 gleiche Teile, die um 180° gedreht montiert sind. Bei den vertikalen Rahmenstücken wird dies durch ein Lochbild ermöglicht, das in beiden möglichen Positionen mit den insgesamt vorhandenen Durchtrittsöffnungen des Türblattes 2 korrespondiert. Daher enthält jedes Rahmenstück 5 Aufnahmeöffnungen 15 für Befestigungselemente der Scharnierteile 13 und weitere Aufnahmeöffnungen 16 für Befestigungselemente der Verschlussorgane 14. Mit Rücksicht darauf, dass zugehörige Durchtrittsöffnungen 17 und 18 im Türblatt 2 unsymmetrisch zur horizontalen Mittelachse angeordnet sein können, enthalten die Rahmenstücke 5 zusätzliche Aufnahmeöffnungen 15 und 16 in einer gespiegelten Position.

Die Rahmenstücke 6 werden von den Befestigungselementen der erwähnten Beschlagteile erfasst und hierdurch am Türblatt befestigt. Zunächst werden die Scharnierteile 13 anhand der Figuren 2 und 3 betrachtet. Wie man erkennt, besitzen die Scharnierteile 13 einen Befestigungszapfen 19, der durch die fluchtenden Öffnungen (Durchtrittsöffnung 17, Aufnahmeöffnung 15) des Türblattes 2 und des Rahmenstückes 5 ragt. Ein Spannstück 20 greift über den Befestigungszapfen 19 und bildet ein Widerlager für zwei Befestigungsschrauben 21, die das Scharnierteil 13 gegen die Außenseite des Türblattes 2 ziehen. Sinngemäß werden die Befestigungselemente der Verschlussorgane 14 zur Befestigung des gegenüberliegenden Rahmenstückes 5 (links in der Figur 1 sowie Figur 4) benutzt. Die Verschlussorgane 14 weisen einen Buchsenteil 22 auf, der durch die zugehörigen Öffnungen (Durchtrittsöffnung 18, Aufnahmeöffnung 16) hindurchragt und der mit einem Gewinde für eine Befestigungsmutter 23 versehen ist.

Wie bereits erwähnt, besteht der Rahmen 4 aus vertikalen und querliegenden Rahmenstücken 5 und 6. Von diesen werden nur die vertikalen Rahmenstücke 5 direkt am Türblatt 2 befestigt. Die verbleibenden Rahmenstücke 6 werden ohne gesonderte Befestigungsmittel form- und kraftschlüssig mit den vertikalen Rahmenstücken 5 und mit dem Türblatt 2 verbunden. Dies geschieht gemäß den Figuren 2 und 3 durch Klemmzungen 24, die aus dem Material der Rahmenstücke 5 an deren Enden herausgebogen sind und die auf die Befestigungsschenkel 8 der Rahmenstücke 6 eine gegen die Innenseite des Türblattes 2 gerichtete Andruckkraft ausüben. Dabei werden die beiden Rahmenstücke 5 und 6 gegenseitig durch eine in der Klemmzunge 24 befindliche Fensteröffnung 25 und eine in die Fensteröffnung 25 eingreifende dachförmige Ausprägung 26 des Rahmenstückes 6 ausgerichtet. Obwohl sich diese Gestaltung in Versuchen als einfach herstellbar und effektiv erwiesen hat, kann ein entsprechendes Ergebnis beispielsweise auch durch das Prinzip "Öse-Lasche" erreicht werden.

Die Trennung des Rahmens 4 in vertikale und querliegende Rahmenstücke 5 und 6 erleichtert aufgrund des geringen Volumens die Lagerung und den Transport. Auch ist die Herstellung gegenüber einem kompletten Rahmen vereinfacht. Der Rahmen 4 wird somit durch die Montage eines lediglich aus den vier Rahmenstücken 5 und 6 bestehenden Teilesatzes gebildet, ohne dass zusätzliche Befestigungs- oder Verbindungselemente benötigt werden. Dies ist für die fabrikmäßige und die benutzerseitige Anwendung gleichermaßen vorteilhaft. Dabei ist das Türblatt für eine Tür mit und ohne Abdichtung gleich.

## Patentansprüche

1. Tür (1) zum Verschließen eines Schaltfeldes oder Schaltschrankes mit Beschlagteilen wie Scharnierteilen (13) und Verschlussorganen (14) sowie mit einem an der Innenseite eines Türblattes (2) angebrachten Rahmen (4) als Träger eines Dichtungsmittels (12), wobei das Türblatt (2) Durchtrittsöffnungen (17, 18) für die Beschlagteile (13, 14) bzw. deren Befestigungsmittel besitzt,
**dadurch gekennzeichnet ,**
**dass** der Rahmen (4) am Türblatt (2) anliegende Befestigungsschenkel (7, 8) aufweist, dass die Befestigungsschenkel (7) der vertikalen Rahmenstücke (5) mit den Durchtrittsöffnungen (17, 18) des Türblattes (2) korrespondierende Ausnahmeöffnungen (15, 16) besitzen und dass mittels der Befestigungsmittel für die Beschlagteile (13, 14) zugleich der Rahmen (4) am Türblatt (2) befestigt ist.

2. Tür nach Anspruch 1,
**dadurch gekennzeichnet ,**
**dass** der Rahmen (4) aus vertikalen, mit den Aufnahmeöffnungen (15, 16) versehenen Rahmenstücken (5) und querliegenden Rahmenstücken (6) gebildet ist, die nur mit den vertikalen Rahmenstücken (5) verbunden sind.

3. Tür nach Anspruch 2,
**dadurch gekennzeichnet ,**
**dass** die vertikalen und die querliegenden Rahmenstücke (5, 6) parallel und im gleichen Abstand zu randseitigen Abkantungen (3) des Türblattes (2) verlaufend angeordnete Randschenkel (9, 10) zur Bildung einer Nut (116) für ein Dichtungsmittel (12) aufweisen.

4. Tür nach einem der vorangehenden Ansprüche,
**dadurch gekennzeichnet ,**
**dass** die querliegenden Rahmenstücke (6) mit den vertikalen Rahmenstücken (4) form- und oder kraftschlüssig verbunden sind.

5. Tür nach einem der vorangehenden Ansprüche,
**dadurch gekennzeichnet ,**
**dass** die vertikalen Rahmenstücke (5) an ihren Enden mit Klemmzungen (24) zum Übergreifen von Befestigungsschenkeln (8) der querliegenden Rahmenstücke (6) versehen sind, die Ausprägungen zum Eingreifen in Fensteröffnungen (25) der Klemmzungen (24) besitzen.

6. Tür nach einem der vorangehenden Ansprüche,
**dadurch gekennzeichnet ,**
**dass** die vertikalen Rahmenstücke (5) zwecks wahlweiser Verwendung als rechtes oder linkes Rahmenstück mit spiegelbildlich angeordneten Paaren von Aufnahmeöffnungen (15, 16) versehen sind.

## Claims

1. Door (1) for closing a switchgear panel or switchgear cabinet, having fitting parts such as hinge parts (13) and closure members (14) and also having a frame (4), which is fitted to the inside of a door leaf (2), as a support for a sealing means (12), with the door leaf (2) having passage openings (17, 18) for the fitting parts (13, 14) or their fastening means, **characterized in that** the frame (4) has fastening limbs (7, 8) which rest against the door leaf (2), **in that** the fastening limbs (7) of the vertical frame pieces (5) have accommodation openings (15, 16) which correspond to the passage openings (17, 18) in the door leaf (2), and **in that** the frame (4) is simultaneously fastened to the door leaf (2) by means of the fastening means for the fitting parts (13, 14).

2. Door according to Claim 1, **characterized in that** the frame (4) is formed from vertical frame pieces (5), which are provided with the accommodation openings (15, 16), and transverse frame pieces (6) which are connected only to the vertical frame pieces (5).

3. Door according to Claim 2, **characterized in that** the vertical and the transverse frame pieces (5, 6) have edge limbs (9, 10), which are arranged to run parallel and at an equal distance to edge bevels (3) of the door leaf (2), in order to form a groove (11) for a sealing means (12).

4. Door according to one of the preceding claims, **characterized in that** the transverse frame pieces (6) are connected to the vertical frame pieces (4) in an interlocking and/or force-fitting manner.

5. Door according to one of the preceding claims, **characterized in that** the ends of the vertical frame pieces (5) are provided with clamping tongues (24) for engaging over fastening limbs (8) of the transverse frame pieces (6) which have embossed areas for engaging in window openings (25) in the clamping tongues (24).

6. Door according to one of the preceding claims, **characterized in that** the vertical frame pieces (5) are provided with pairs of accommodation openings (15, 16) which are arranged in mirror-image fashion, for the purpose of selectively using the said frame piece as a right-hand or lefthand frame piece.

## Revendications

1. Porte ( 1 ) pour fermer un tableau ou une armoire de commutation, comportant des ferrures comme des éléments ( 13 ) de charnière et des organes ( 14 ) de fermeture, et comportant un cadre ( 4 ) installé sur le côté intérieur d'un battant ( 2 ) de porte comme support d'un moyen ( 12 ) d'étanchéité, le battant ( 2 ) de porte possédant des ouvertures ( 17, 18 ) de passage pour les ferrures ( 13, 14 ) ou leurs moyens de fixation,
**caractérisée en ce que** le cadre ( 4 ) comporte des branches ( 7, 8 ) de fixation appliquées contre le battant ( 2 ) de porte, **en ce que** les branches ( 7 ) de fixation des éléments ( 5 ) verticaux de cadre possèdent des ouvertures ( 15, 16 ) réceptrices qui correspondent avec les ouvertures ( 17, 18 ) de passage du battant ( 2 ) de porte, et **en ce qu'**à l'aide des moyens de fixation pour les ferrures ( 13, 14 ), le cadre ( 4 ) est en même temps fixé sur le battant ( 2 ) de porte.

2. Porte suivant la revendication 1, **caractérisée en ce que** le cadre ( 4 ) est formé d'éléments ( 5 ) verticaux de cadre pourvus des ouvertures ( 15, 16 ) réceptrices, et d'éléments ( 6 ) transversaux de cadre qui sont assemblés uniquement aux éléments ( 5 ) verticaux de cadre.

3. Porte suivant la revendication 2, **caractérisée en ce que** les éléments ( 5, 6 ) verticaux et transversaux de cadre comportent des branches ( 9, 10 ) de bord destinées à former une rainure ( 11 ) pour un moyen ( 12 ) d'étanchéité, branches qui sont disposées en s'étendant en parallèle et à la même distance de pliures ( 3 ) de bord du battant ( 2 ) de porte.

4. Porte suivant l'une des revendications précédentes, **caractérisée en ce que** les éléments ( 6 ) transversaux de cadre sont assemblés en engagement positif et/ou à force aux éléments ( 5 ) verticaux de cadre.

5. Porte suivant l'une des revendications précédentes, **caractérisée en ce que** les éléments ( 5 ) verticaux de cadre sont pourvus à leurs extrémités de languettes ( 24 ) de serrage pour engager en recouvrement des branches ( 8 ) de fixation des éléments ( 6 ) transversaux de cadre, branches qui possèdent des formations en relief destinées à s'engager dans des ouvertures ( 25 ) du genre fenêtres des languettes ( 24 ) de serrage.

6. Porte suivant l'une des revendications précédentes, **caractérisée en ce que** les éléments ( 5 ) verticaux de cadre sont pourvus, afin d'être utilisés au choix comme élément de cadre de droite ou de gauche, de paires disposées symétriquement d'ouvertures ( 15, 16 ) réceptrices.
